# EUROPÄISCHE PATENTSCHRIFT

(11) **EP 0 900 160 B1**
(45) Veröffentlichungstag und Bekanntmachung des Hinweises auf die Patenterteilung: **11.10.2000**
(21) Anmeldenummer: 97923944.9
(22) Anmeldetag: 20.05.1997
(51) Int. Cl.: B60T 8/00

(54) **VERFAHREN ZUR ELEKTRONISCHEN BREMSKRAFTVERTEILUNG**
ELECTRONIC BRAKING-FORCE-DISTRIBUTION METHOD
PROCEDE DE REPARTITION ELECTRONIQUE DE LA FORCE DE FREINAGE

(30) Priorität: 22.05.1996 DE 19620584
(43) Veröffentlichungstag der Anmeldung: 10.03.1999
(73) Patentinhaber: Continental Teves AG & Co. oHG, 60488 Frankfurt (DE)
(72) Erfinder: ZENZEN, Markus, D-65795 Hattersheim 2 (DE); PRÖGER, Thomas, D-63322 Rödermark 1 (DE)
(74) Vertreter: Blum, Klaus-Dieter, Dipl.-Ing.
(86) Internationale Anmeldenummer: EP9702560
(87) Internationale Veröffentlichungsnummer: WO9744224

(56) Entgegenhaltungen:
- DE-A- 3 923 782
- DE-A- 4 314 830

## Beschreibung

Die vorliegende Erfindung betrifft ein Verfahren zur elektronischen Bremskraftverteilung gemäß dem Oberbegriff des Anspruchs 1.

Aus dem Dokument DE-A-3 923 782 geht ein Verfahren zur Schätzung der Fahrzeuggeschwindigkeit eines Fahrzeugs bei einer Kurvenfahrt hervor, welches zur Bestimmung von Rutschgeschwindigkeiten von Vorder- und Hinterrädern in einem Antiblockiersystem verwendet wird.

Derartige Verfahren sind vielfältig bekannt und dienen in erster Linie dazu, während einer Bremsung ein Blockieren der Hinterräder vor den Vorderrädern zu verhindern. Hierzu wird bei druckmittelbetätigten Bremsanlagen an den Hinterachsbremsen bei Bedarf eine Druckhaltephase oder eine Druckabbauphase eingeleitet, welche dazu führt, daß der Bremsschlupf der Hinterachsbremsen sich nicht weiter erhöht und daß somit ein Blockieren der Hinterräder verhindert wird. Eine gebräuchliche Art und Weise zur Feststellung, ob ein Bedarf zur Einleitung einer elektronischen Bremskraftverteilung besteht oder nicht, liegt darin, die Radgeschwindigkeiten der Hinterräder, wobei mit Radgeschwindigkeit immer die Radumfangsgeschwindigkeit gemeint ist, mit einer aus allen Radgeschwindigkeiten ermittelten Fahrzeug-Referenzgeschwindigkeit zu vergleichen. Ist eine Einzelradgeschwindigkeit eines Hinterrades während einer Bremsung deutlich langsamer als die Fahrzeug-Referenzgeschwindigkeit, so ist ein hoher Bremsschlupf festzustellen, und es wird bei einer druckmittelbetätigten Bremsanlage beispielsweise eine Druckhaltephase eingeleitet, so daß der Bremsdruck an dem einen oder auch an beiden Hinterrädern nicht weiter erhöht wird.

Zur Feststellung einer Fahrzeug-Referenzgeschwindigkeit ist es üblich, während einer Fahrzeugbeschleunigung jeweils die Einzelradgeschwindigkeit des langsamsten Rades heranzuziehen, während bei einer Bremsung oder Verzögerung die Einzelradgeschwindigkeit des jeweils schnellsten Rades als Fahrzeug-Referenzgeschwindigkeit angenommen wird. Es gibt auch Überlegungen, jeweils das zweitlangsamste oder das zweitschnellste Rad zur Ermittlung der Fahrzeug-Referenzgeschwindigkeit heranzuziehen. Das Prinzip liegt aber immer darin, daß das Rad, welches die Fahrzeug-Referenzgeschwindigkeit darstellt, nach Möglichkeit den geringsten Schlupf aufweisen soll. Beim Durchfahren einer Kurve ergibt sich dann das Problem, daß selbstverständlich die kurvenäußeren Räder eine höhere Einzelradgeschwindigkeit aufweisen als die kurveninneren Räder. Demzufolge wird also auch die Einzelradgeschwindigkeit eines der kurvenäußeren Räder als Fahrzeug-Referenzgeschwindigkeit angenommen. Der vom elektronischen Regler berechnete Bremsschlupf, der sich aus der Differenz von Fahrzeug-Referenzgeschwindigkeit und Einzelradgeschwindigkeit der Hinterräder berechnet, ist aufgrund des Geometrieeinflusses bei einer Kurvenfahrt also fehlerhaft. Die Auswirkung ist, daß während einer elektronischen Bremskraftverteilung zu früh eine Druckhaltephase eingeleitet wird und unter Umständen zu viel Druck während der Regelung abgebaut wird.

Würde aber die Eintrittsschwelle in eine Druckhaltephase erhöht, so würde unter Umständen das kurvenäußere Hinterrad überbremst, was zum Verlust von Seitenführungskräften führen würde.

Der vorliegenden Erfindung liegt die Aufgabe zugrunde, ein Verfahren der eingangs genannten Art zur elektronischen Bremskraftverteilung zu schaffen, welches bei einer Kurvenfahrt den Geometrieeinfluß kompensiert.

Diese Aufgabe wird gelöst in Verbindung mit den kennzeichnenden Merkmalen des Anspruchs 1. Das Prinzip der vorliegenden Erfindung besteht darin, bei einer gewonnenen Information über eine Kurvenfahrt dem kurveninneren Hinterrad statt einer Einzelradgeschwindigkeit eine Einzelrad-Referenzgeschwindigkeit zuzuordnen, welche sich als Summe der Einzelradgeschwindigkeit und einer Kompensationsgeschwindigkeit errechnet. Unter Beibehaltung der Eintrittsschwellen in die elektronische Bremskraftverteilung kann dann dieses kurveninnere Hinterrad durchaus eine wesentlich niedrigere Einzelradgeschwindigkeit aufweisen als das die Fahrzeug-Referenzgeschwindigkeit bildende Rad, wenn sich das Fahrzeug in einer Kurve befindet. Da die Einzelrad-Referenzgeschwindigkeit für das Eintrittskriterium in die elektronische Bremskraftverteilung herangezogen wird, wird erst dann eine Druckhaltephase eingeleitet, wenn das kurveninnere oder auch das kurvenäußere Hinterrad in einen tatsächlichen großen Bremsschlupf geraten.

Erläuternd sei hier noch erwähnt, daß sich die Bezeichnung Einzelradgeschwindigkeit auf die anhand des jeweils dem betroffenen Rad zugeordneten Radsensors ermittelte Radumfangsgeschwindigkeit bezieht, während die Einzelrad-Referenzgeschwindigkeit die Summe aus Einzelradgeschwindigkeit und Kompensationsgeschwindigkeit am langsameren Hinterrad beim Durchfahren einer Kurve darstellt. Bei den übrigen Rädern stimmen Einzelradgeschwindigkeit und Einzelrad-Referenzgeschwindigkeit überein.

Es ist denkbar, daß eine Geschwindigkeitsdifferenz zwischen den Vorderrädern allein schon dadurch auftritt, daß eines der Vorderräder beispielsweise ein Schlagloch durchfährt und dadurch eine starke Verzögerung erfährt. Um sicher zu sein, daß eine solche Geschwindigkeitsdifferenz zwischen den Vorderradgeschwindigkeiten auch auf eine Kurvenfahrt zurückzuführen ist, empfiehlt es sich, auch die Einzelradgeschwindigkeiten der Hinterachse miteinander zu vergleichen und die Differenzen der Vorderräder und der Hinterräder miteinander zu vergleichen. Nur bei gleichen Vorzeichen dieser Differenzen zwischen linker und rechter Fahrzeugseite ist mit Sicherheit eine Kurvenfahrt anzunehmen.

Bei einer erfindungsgemäßen Kompensation von Geometrieeinflüssen in der Kurve empfiehlt es sich, bei einer Bremsung als Fahrzeug-Referenzgeschwindigkeit in der Tat die größte Einzelradgeschwindigkeit anzunehmen, da bei einer Bremsung das Rad mit der größten Geschwindigkeit den geringsten Schlupf aufweist und somit seine Umfangsgeschwindigkeit am ehesten der realen Fahrzeuggeschwindigkeit entspricht.

Indem als Kompensationsgeschwindigkeit die Geschwindigkeit herangezogen wird, welche sich aus der Addition der Geschwindigkeitsdifferenzen von Vorder- und Hinterachse und nachträglicher Division durch einen Faktor k ergibt, beispielsweise 2 oder 3, stellt sicher, daß die Einzelrad-Referenzgeschwindigkeit jeweils situationsbezogen angepaßt wird, wobei Abweichungen durch Fahrbahnunebenheiten durch die Summation der Vorderachs- und Hinterachsdifferenz weitgehend ausgeglichen werden. Die Zahl k kann dabei der gewünschten Anspruchempfindlichkeit angepaßt werden. Sie kann fahrzeugspezifisch gewählt werden oder auch von anderen Größen abhängig gemacht werden.
Beispielsweise kann die Zahl k mit der Fahrzeugquerbeschleunigung korrelieren, welche ein Maß für den Kurvenradius der gerade durchfahrenen Kurve darstellt. Dabei ist nämlich die Querbeschleunigung um so größer, je kleiner bei gleicher Geschwindigkeit der Kurvenradius ist. Umso größer muß auch jeweils die Kompensationsgeschwindigkeit gewählt werden.

Nun gibt es die Möglichkeit, wie beschrieben nur die Geschwindigkeitsdifferenz der Vorderachse heranzuziehen, um eine Kurvenfahrt zu erkennen. Dann ergibt sich eine sehr einfache Struktur des zugehörigen Rechenprogramms. Wenn zusätzlich die Geschwindigkeitsdifferenz der Hinterräder berücksichtigt wird, kann zusätzlich eine Fehlerkennung auf Kurvenfahrt ausgeschlossen werden, was der Regelgüte zugute kommt.

Es ist möglich, das erfindungsgemäße Verfahren auf niedrige Geschwindigkeitsbereiche zu begrenzen. Bei niedrigen Geschwindigkeiten ist der Geometrieeinfluß bei Kurvenfahrt größer, da kleinere Kurvenradien und somit größere Geschwindigkeitsdifferenzen zwischen linker und rechter Fahrzeugseite möglich sind .

Grundsätzlich ergibt sich beim erfindungsgemäßen Verfahren ein erhöhter Pedalkomfort am Bremspedal, da aufgrund er geringeren Zahl von Druckabbauten weniger Druckaufbauten an den kurveninneren Hinterrädern erforderlich sind. Dies ergibt einen geringeren Volumendurchsatz und somit ein ruhigeres Bremspedal. Durch die geringere Anzahl von Druckabbauten werden Geräusche durch Ventiltätigkeiten reduziert. Generell ergibt sich eine seltenere Betätigung des Auslaßventils.

In einer Kurve kann die Bremskraft an der Hinterachse wesentlich besser ausgenutzt werden, ohne daß an Fahrstabilität eingebüßt wird. Dies erfordert bei gleicher Fahrzeugverzögerung wie beim Stand der Technik geringere Pedalbetätigungskräfte.

Die meisten dieser Vorteile beziehen sich auf eine druckmittelbetätigte Bremsanlage. Die Erhöhung der Bremskraftausnutzung bietet sich als Vorteil jedoch für jede Art von Bremsanlagen, die mit einer elektronischen Bremskraftverteilung ausgerüstet sind, sofern das erfindungsgemäße Verfahren Anwendung findet.

## Patentansprüche

1. Verfahren zur elektronischen Bremskraftverteilung an einem zweiachsigen, vierrädrigen Fahrzeug in einer Kurve, wobei zur Ermittlung des Eintritts in die elektronische Bremskraftverteilung an einem Hinterrad die aus mindestens einem Radsensorsignal gewonnene jeweilige Einzelrad-Referenzgeschwindigkeit mit einer Fahrzeug-Referenzgeschwindigkeit verglichen wird, dadurch **gekennzeichnet**, daß aus dem Vergleich der aus den jeweiligen Radsensorsignalen gewonnenen Einzelradgeschwindigkeiten zumindest des rechten und des linken Vorderrades eine Einzelradgeschwindigkeitsdifferenz zwischen links und rechts ermittelt wird, die zur Berechnung einer Kompensationsgeschwindigkeit herangezogen wird, welche zu der - dem an der langsameren Fahrzeugseite angeordneten Hinterrad zugeordneten, aus dem Radsensorsignal dieses Hinterrades gewonnenen - Einzelradgeschwindigkeit addiert wird zur Ermittlung der Einzelrad-Referenzgeschwindigkeit dieses Hinterrades.

2. Verfahren nach Anspruch 1, dadurch **gekennzeichnet**, daß die Einzelrad-Referenzgeschwindigkeiten der Vorderräder und des schnelleren Hinterrades den Einzelradgeschwindigkeiten dieser Räder gleichgesetzt werden.

3. Verfahren nach einem der Ansprüche 1 und 2, dadurch **gekennzeichnet**, daß zur Berechnung der Kompensationsgeschwindigkeit auch die Differenz der Einzelradgeschwindigkeiten der Hinterachse erfaßt wird und eine Kompensationsgeschwindigkeit nur bei gleichen Vorzeichen der Geschwindigkeitsdifferenzen von Vorder- und Hinterachse berechnet wird.

4. Verfahren nach einem der vorhergehenden Ansprüche, dadurch **gekennzeichnet**, daß die Fahrzeug-Referenzgeschwindigkeit bei einer Bremsung gleich der höchsten Einzelradgeschwindigkeit angenommen wird.

5. Verfahren nach Anspruch 3 oder 4, dadurch **gekennzeichnet**, daß die Kompensationsgeschwindigkeit durch Aufsummieren der Differenzen von Vorder- und Hinterachse und Division dieser Summe durch eine Zahl k, 1,5 ≤ k ≤ 4, berechnet wird.

6. Verfahren nach einem der vorhergehenden Ansprüche, dadurch **gekennzeichnet**, daß die Kompensationsgeschwindigkeit umso höher ist, je größer die Querbeschleunigung des Fahrzeugs ist, wobei letztere gemessen oder berechnet wird.

## Claims

1. Method of electronic brake force distribution on a two-axle four-wheel vehicle during cornering, wherein the respective individual wheel reference speed produced from at least one wheel sensor signal is compared with a vehicle reference speed to determine the activation of electronic brake force distribution on a rear wheel,
**characterized** in that an individual wheel speed difference between left and right is determined from the comparison between the individual wheel speeds of at least the right and the left front wheel produced from the respective wheel sensor signals, and the individual wheel speed difference is taken into account for the calculation of a compensation speed which is added to the individual wheel speed that is associated with the rear wheel arranged on the slower vehicle side and produced from the wheel sensor signal of the rear wheel in order to determine the individual wheel reference speed of this rear wheel.

2. Method as claimed in claim 1,
**characterized** in that the individual wheel reference speeds of the front wheels and the faster rear wheel are equated with the individual wheel speeds of these wheels.

3. Method as claimed in any one of claims 1 and 2,
**characterized** in that, for the calculation of the compensation speed, the difference of the individual wheel speeds of the rear axle is also ascertained, and a compensation speed is calculated-only when the signs of the speed differences of front and rear axles are equal.

4. Method as claimed in any one of the preceding claims,
**characterized** in that the vehicle reference speed during braking is set to be equal to the maximum individual wheel speed.

5. Method as claimed in claim 3 or claim 4,
**characterized** in that the compensation speed is calculated by summing the differences of front and rear axles and division of this sum by a figure k, 1.5 ≤ k ≤ 4.

6. Method as claimed in any one of the preceding claims,
**characterized** in that the compensation speed is the higher the greater the transverse acceleration of the vehicle is, and the latter is measured or calculated.

## Revendications

1. Procédé de répartition électronique de la force de freinage en virage pour un véhicule à quatre roues et deux essieux, la vitesse de roue individuelle de référence d'une roue arrière respective, obtenue à partir d'au moins un signal de capteur de roue, étant comparée à une vitesse de référence du véhicule afin de déterminer l'introduction de la répartition électronique de la force de freinage, **caractérisé** en ce que, en comparant les vitesses de roues individuelles, obtenues à partir des signaux de capteurs de roue respectifs, d'au moins la roue avant droite et la roue avant gauche, on détermine une différence de vitesses de roues individuelles entre la gauche et la droite qui est utilisée pour calculer une vitesse de compensation qui est ajoutée à la vitesse de roue individuelle - associée à la roue arrière disposée sur le côté le plus lent du véhicule et obtenue à partir du signal de capteur de roue de cette roue arrière - pour déterminer la vitesse de roue individuelle de référence de cette roue arrière.

2. Procédé selon la revendication 1, **caractérisé** en ce qu'on pose que les vitesses de roues individuelles de référence des roues avant et de la roue arrière la plus rapide sont égales aux vitesses de roues individuelles de ces roues.

3. Procédé selon la revendication 1 ou 2, **caractérisé** en ce qu'on détermine également la différence des vitesses de roues individuelles de l'essieu arrière pour calculer la vitesse de compensation, et on ne calcule une vitesse de compensation que si les différences de vitesses pour l'essieu avant et l'essieu arrière sont de même signe.

4. Procédé selon l'une quelconque des revendications précédentes, **caractérisé** en ce que, pour un freinage, la vitesse de référence du véhicule est supposée égale à la vitesse de roue individuelle la plus élevée.

5. Procédé selon la revendication 3 ou 4, **caractérisé** en ce que la vitesse de compensation est calculée en additionnant les différences pour l'essieu avant et l'essieu arrière et en divisant cette somme par un nombre k, avec 1,5 ≤ k ≤ 4.

6. Procédé selon l'une quelconque des revendications précédentes, **caractérisé** en ce que la vitesse de compensation est d'autant plus grande que l'accélération transversale du véhicule est élevée, cette accélération étant mesurée ou calculée.
